Europäisches Patentamt

European Patent Office

Office européen des brevets

(19)

(11) Veröffentlichungsnummer : **0 351 519 B1**

(12) EUROPÄISCHE PATENTSCHRIFT

(45) Veröffentlichungstag der Patentschrift :
08.07.92 Patentblatt 92/28

(51) Int. Cl.⁵ : **B60H 1/00,** B60H 1/18

(21) Anmeldenummer : **89109352.8**

(22) Anmeldetag : **24.05.89**

(54) **Klimaanlage für ein luftgekühles Kraftfahrzeug.**

(30) Priorität : **21.07.88 DE 3824794**

(43) Veröffentlichungstag der Anmeldung :
**24.01.90 Patentblatt 90/04**

(45) Bekanntmachung des Hinweises auf die
Patenterteilung :
**08.07.92 Patentblatt 92/28**

(84) Benannte Vertragsstaaten :
**DE ES FR GB IT**

(56) Entgegenhaltungen :
**DE-A- 3 217 825**
**GB-A- 1 246 803**
**GB-A- 1 278 202**

(56) Entgegenhaltungen :
**ATZ AUTOMOBILTECHNISCHE ZEITSCHRIFT.**
**vol. 77, no. 10, Oktober 1975, STUTTGART DE**
**Seite 303 "Eine neue elektronischeBehr-**
**Heizungsautomatik für luftgekühlte Kraftfahr-**
**zeuge"**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Burst, Hermann, Dipl.-Ing.**
**Telemannstrasse 4**
**W-7255 Rutesheim (DE)**
Erfinder : **Pross, Walter**
**Parkstrasse 23**
**W-7032 Sindelfingen (DE)**
Erfinder : **Petri, Horst, Dipl.-Ing. FH**
**Kelterstrasse 10**
**W-7251 Hemmingen (DE)**

**Beschreibung**

Die Erfindung bezieht sich auf eine Klimaanlage für ein luftgekühltes Kraftfahrzeug gemäß dem Oberbegriff des Anspruchs 1.

Bei einer bekannten Klimaanlage der eingangs genannten Gattung (DE-A-32 17 825) ist das Gehäuse mit einer Mischkammer versehen, in die mindestens ein Zuströmkanal für Warmluft, ein Zuströmkanal für Frischluft und ein Zuströmkanal für gekühlte Luft mündet. In der Mischkammer ist eine verstellbare Trennwand vorgesehen, die die Verteilung der eintretenden Luftströme auf die Ausgangskanäle maßgebend beeinflußt. Aufgrund der Anordnung der Trennwände ergibt sich eine Temperaturschichtung. Dieser Anordnung haftet der Nachteil an, daß die insbesondere bei einem luftgekühlten Fahrzeug auftretenden stark schwankenden Warmlufttemperaturen sowie die Volumenschwankungen nur schwerlich ausgeglichen werden können.

Aufgabe der Erfindung ist es, an einer Klimaanlage für ein vorzugsweise luftgekühltes Fahrzeug solche Vorkehrungen zu treffen, daß die wechselnden Warmlufttemperaturen sowie die Volumenschwankungen schnell ausgeglichen werden können, so daß im Fahrgastraum eine gleichbleibende Temperatur herrscht.

Erfindungsgemäß wird diese Aufgabe durch die kennzeichnenden Merkmale des Anspruchs 1 gelöst. Zweckmäßige Ausgestaltungen der Erfindung sind in den Unteransprüchen enthalten.

Die mit der Erfindung hauptsächlich erzielten Vorteile sind darin zu sehen, daß durch das Verwirbeln und Vermischen der einzelnen Luftströme (Warmluft, Frischluft, Umluft, gekühlte Luft) im Lüfterrad des Gebläses und das selbsttätige Korrigieren der Temperaturmischklappe eine weitgehend gleichbleibende Temperatur im Fahrgastraum erzielt wird. Die auftretenden Temperatur- und Volumenschwankungen des Warmluftstromes werden somit schnell kompensiert. Die im Warmluftkanal nach den Abgaswärmetauschen angeordneten differenzdruckgesteuerten Klappen bewirken, daß die heiße Luft bei Bedarf abgeblasen wird und die Wärmetauscher auch im Sommer von Luft durchströmt werden können. Bei den Warmluftkanal verschließender Temperaturmischklappe öffnet sich die differenzdruckgesteuerte Klappe selbsttätig. Durch die erfindungsgemäße Anordnung wird vor allem ein schnelles Ansprechen der Klimaanlage auf wechselnde Temperaturen oder Volumenschwankungen und eine nahezu gleichmäßige Lufttemperatur an allen Ausgangskanälen erzielt.

Ein Ausführungsbeispiel der Erfindung ist in der Zeichnung dargestellt und wird im folgenden näher erläutert.

Es zeigt

Fig. 1 eine Seitenansicht eines luftgekühlten Personenwagens mit einer Klimaanlage,

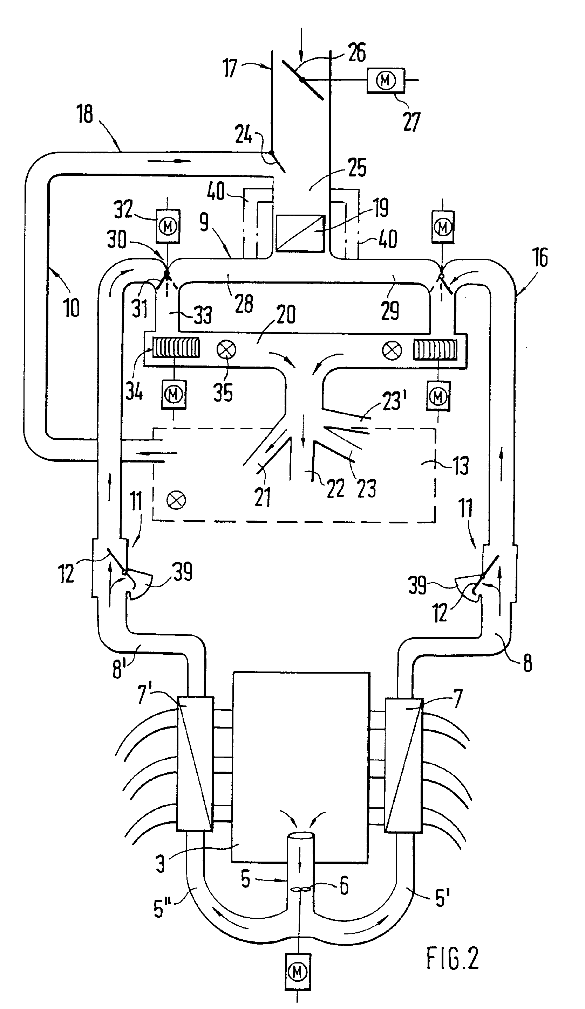

Fig. 2 eine schematische Darstellung der Klimaanlage,

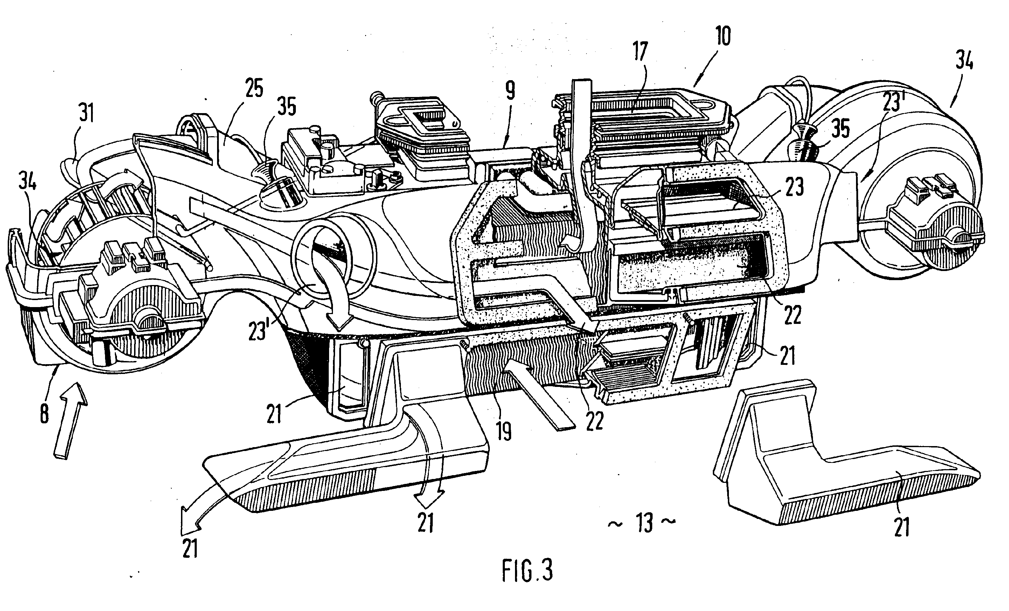

Fig. 3 eine perspektivische Darstellung des Gehäuses der Klimaanlage, teilweise im Schnitt,

Fig. 4 einen Schnitt durch die im Warmluftkanal angeordneten differenzdruckgesteuerten Klappen in größerem Maßstab.

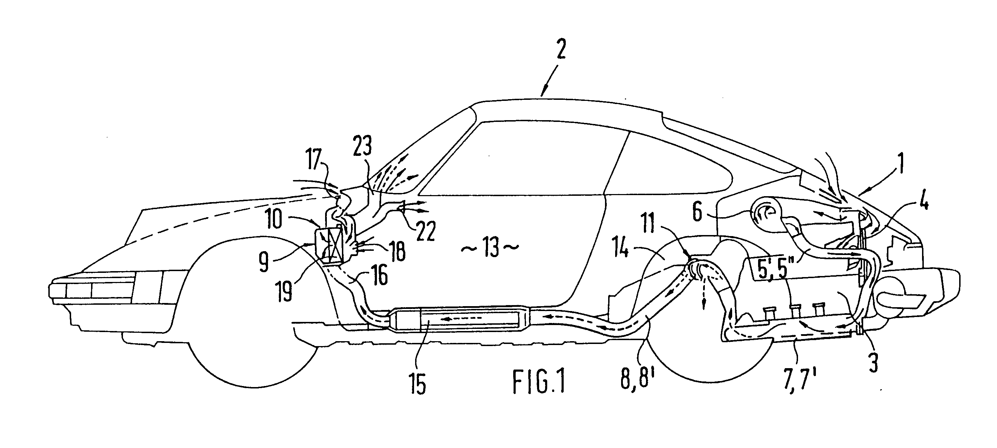

In Fig. 1 ist eine im Heck 1 eines Kraftfahrzeuges (Personenwagens) 2 angeordnete luftgekühlte Brennkraftmaschine 3 mit einem Motorkühlgebläse 4 und Abgasrohren 5 dargestellt. Ein Teil der vom Motorkühlgebläse 4 angesaugten Frischluft wird von einem elektrischen Heizungsgebläse 6 angesaugt, von dem aus sich das Abgasrohr 5 in zwei Stränge 5′, 5″ aufteilt. Die Frischluft wird von Abgaswärmetauschern 7, 7′ je nach dem Betriebszustand der Brennkraftmaschine 3 erwärmt und in Warmluftkanälen 8, 8′ nach vorne geleitet. Die Abgaswärmetauscher 7, 7′ ummanteln die Abgasrohre 5′, 5″ abschnittsweise. Im Ausführungsbeispiel ist jeder der beiden Zylinderreihen der Brennkraftmaschine 3 ein separater Abgaswärmetauscher 7 bzw. 7′ zugeordnet. Von den Abgaswärmetauschern 7, 7′ ausgehend sind die erwärmte Luft führende Warmluftkanäle 8, 8′ vorgesehen, die in ein Gehäuse 9 einer Klimaanlage 10 münden.

In beiden Warmluftkanälen 8, 8′ ist nach den Wärmetauschern 7, 7′ je ein Klappenkasten 11 mit einer differenzdruckgesteuerten Klappe 12 angeordnet, so daß die Warmluft entweder in das Gehäuse 9 der Klimaanlage 10 geführt oder nach außen hin ins Freie abgeblasen wird (Radkasten 14). Ferner sind in den beiden Warmluftkanälen 8, 8′ Schalldämpfer 15 angeordnet.

Die Klimaanlage 10 umfaßt im wesentlichen ein Gehäuse 9 mit Zuströmkanälen 16, 17, 18 für die Warmluft, die Frischluft und die Umluft bzw. die gekühlte Luft, einen Verdampfer 19, eine zwei Gebläse 34 enthaltende Druckkammer 20 sowie Ausgangskanäle 21, 22, 23, 23′ für die gemischte Luft. Der Zuströmkanal 16 ist der Warmluft zugeordnet, während der Zuströmkanal 17 die Frischluft und der Zuströmkanal 18 die Umluft leitet. Der Ausgangskanal 21 führt in den Fußraum, der Ausgangskanal 22 zur Mitteldüse, der Ausgangskanal 23 zur Entfrosterdüse und der Ausgangskanal 23′ zu den Seitendüsen.

Vor den Auslaßöffnungen sämtlicher Ausgangskanäle 21, 22, 23, 23′ sind nicht näher dargestellte einzeln absperrbare Düsen vorgesehen, durch die wahlweise temperierte Luft in den Fahrgastraum 13 einleitbar ist. Der vom Fahrgastraum 13 in den Zuströmkanal 17 für Frischluft mündende Zuströmkanal 18 für Umluft weist im Verbindungsbereich eine druckbelastete Umluftklappe 24 auf, so daß entweder Frischluft oder Umluft oder eine Mischung aus Frischluft bzw. Umluft in den Kaltluftstrang 25 einströmen kann. Die Umluftklappe 24 ist an ihrem einen Ende drehbar gelagert (Flatterventil).

Im Zuströmkanal 17 für Frischluft ist eine Frischluftklappe 26 vorgesehen, die mittels eines elektrischen Stellmotors 27 angesteuert wird. Die Frischluftklappe 26 ist mittig gelagert und geschwindigkeits- und gebläsestufenabhängig geregelt. Im Umluftbetrieb, bei "max. kalt" und "max. heizen" wird sie geschlossen.

Nach der Zusammenführung der Zuströmkanäle 17, 18 ist im gemeinsamen Kaltluftstrang 25 der Verdampfer 19 angeordnet. Nach dem Verdampfer 19 teilt sich der Kaltluftstrang 25 in zwei zur Seite hin führende Abschnitte 28, 29 auf, wobei jeder Abschnitt 28, 29 mit einem seitlich außenliegend angeordneten Warmluftkanal 8, 8' bzw. 16 zusammengeführt ist. In jedem Verbindungsbereich 30 ist eine Temperaturmischklappe 31 vorgesehen, mit der die Zusammensetzung von Warmluft und Kaltluft frei wählbar ist. Jede Temperaturmischklappe 31 wirkt mit einem Stellmotor 32 zusammen. Nach jeder Temperaturmischklappe 31 führt ein Kanal 33 zur Druckkammer 20, in der seitlich außenliegend die beiden Gebläse 34 angeordnet sind. Die Gebläse 34 sind als Radialgebläse ausgebildet und in Bezug auf die Warmluft und den Verdampfer 19 saugseitig angeordnet. Nach den Gebläsen 34 sind am Gehäuse 9 Ausblastemperaturfühler 35 vorgesehen.

Erfindungsgemäß wird bei dieser Klimaanlage 10 Warmluft und/oder Frischluft und/oder Umluft bzw. gekühlte Luft gemeinsam zumindest einem Gebläse 34 zugeführt, in diesem verwirbelt und vermischt und nach weiterem vermischen in der Druckkammer 20 und den einzelnen Ausgangskanälen 21, 22, 23, 23' zugeführt.

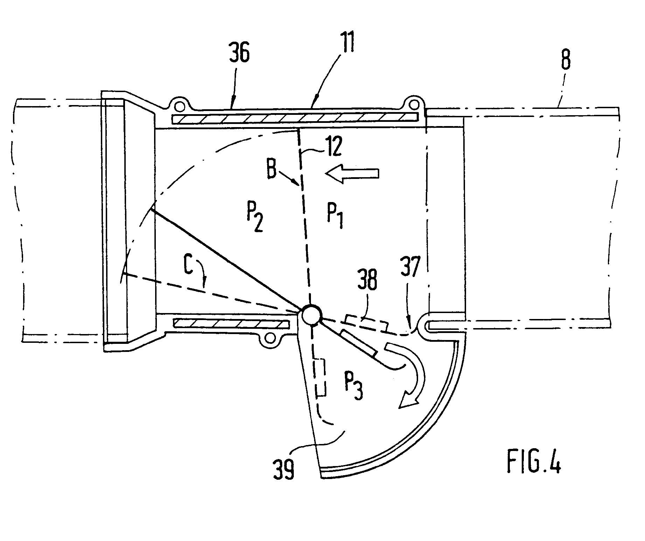

Die beiden Ausblastemperaturfühler 35 nach den Gebläsen 34 fragen ständig die Temperaturabweichung $\Delta T$ von der eingestellten Solltemperatur ab und korrigieren nötigenfalls selbsttätig die Stellung der Temperaturmischklappen 31. Bei Erreichen einer definierten Maximaltemperatur (z.B. 95°C) werden die Temperaturmischklappen 31 so verstellt, daß keine Warmluft mehr in das Gebläse 34 einströmen kann. Die in den beiden Warmluftkanälen 8, 8' angeordneten differenzdruckgesteuerten Klappen 12 funktionieren in Abhängigkeit von der Stellung der Temperaturmischklappe 31, d.h. bei geschlossenem Warmluftkanal 8 öffnet sich die differenzdruckgesteuerte Klappe 12 selbsttätig und die Warmluft fließt durch die Abluftöffnung 39 ins Freie ab. Die differenzdruckgesteuerte Klappe 12 umfaßt ein aus Aluminium-Druckguß gefertigtes zweiteiliges Gehäuse 36 und eine aus hochlegiertem Blech gefertigte Klappe, die nahezu mittig gelagert ist (Fig. 4). Die Klappe 12 ist am unteren Ende mit einem Spoiler 37 und einem Ausgleichsgewicht 38 versehen. In Einbaulage steht die Klappe 12 etwa senkrecht im Gehäuse 36 (Stellung B -max. kühlen) und die Warmluft kann nach außen hin ins Freie abströmen. In der Stellung B wird die Abluft gezielt in den Radkasten 14 abgeführt, damit Bauteile wie Bremsschläuche etc. nicht aufgeheizt werden.

Wird der Druck P1 größer als der Druck P2, bewegt sich die Klappe 12 von der Stellung B in die Stellung C (- max. heizen). Zwischenstellungen sind je nach $P_{dyn}$ dynamisch möglich.

Bei den gegebenen Raumverhältnissen ist die Verwendung eines Spoilers 37 am Kappenende und eines Ausgleichsgewichts 38 notwendig, da sonst die gewünschte Stellung C nicht erreicht werden kann. Bei allen Betriebszuständen wird verhindert, daß über die Abluftöffnung 39 Abgase angesaugt werden können. Der Druck P1 ist immer größer als der Druck P3. In der Stellung C (max. heizen) schließt die Klappe 12 dicht mit dem Gehäuse 36 ab, d.h. die Abluftöffnung 39 ist geschlossen. Somit gelangt der Luftstrom vollständig in das Gehäuse 9 der Klimaanlage 10.

Damit der Druckverlust des Verdampfers 19 ausgeschaltet wird, kann bei der Klimaanlage 10 auch ein strichpunktiert dargestellter Umluft-/Frischluftbypaß 40 vorgesehen sein, so daß bei bestimmten Betriebsbedingungen nur eine kleine Menge von Frischluft/Umluft oder gar keine Frischluft/Umluft durch den Verdampfer 19 hindurchströmt, sondern diesen umströmt. Zur Geräuschabsorption sind in der Druckkammer 20 Wandungen mit nicht näher dargestellten schallabsorbierenden Formteilen beschichtet.

Die erfindungsgemäße Klimaanlage 10 eignet sich auch für Fahrzeuge mit wassergekühlten Brennkraftmaschinen.

## Patentansprüche

1. Klimaanlage für ein vorzugsweise luftgekühltes Fahrzeug mit einem Gehäuse (9), in dem ein Verdampfer (19) eine Kammer (20) und zumindest ein Gebläse (34) angeordnet sind, wobei das Gehäuse (9) Ausgangskanäle (21,22,23,23') mit einzeln absperrbaren Entfroster-, Mittel- und Fußraumdüsen aufweist, durch die wahlweise Warmluft und/oder Kaltluft in den Fahrgastraum (13) einleitbar ist und daß das Gehäuse (9) mit zumindest einem einen Abgaswärmetauscher (7,7') enthaltenden Warmluftkanal sowie Zuströmkanälen für Frischluft (19) und Umluft (18) in Verbindung steht, **dadurch gekennzeichnet**, daß Warmluft und/oder Frischluft und/oder Umluft bzw. gekühlte Luft gemeinsam in zumindest ein Gebläse (34) eingeleitet und in diesem verwirbelt sowie vermischt wird und daß die vermischte Luft anschließend über einzelne Ausgangskanäle (21, 22, 23,23') dem Fahrgastraum (13) zugeführt wird, wobei ein nach dem Gebläse (34) angeordneter Ausblastemperaturfühler (35) die Temperaturabweichung ($\Delta T$) der vermischten Luft von der eingestellten Solltemperatur abfragt und abhängig von der Temperaturabweichung (ΔT) selbsttätig die Stellung einer vor dem Gebläse (34) vorgesehenen Temperaturmischklappe (31) korrigiert.

2. Klimaanlage nach Anspruch 1, **dadurch gekennzeichnet**, daß der Zuströmkanal (17) für Frischluft und der Zuströmkanal (18) für Umluft in einen gemeinsamen Kaltluftstrang (25) zusammengeführt sind, in dem der Verdampfer (19) strömungsseitig gesehen nach einer Umluftklappe (24) und vor einer Temperaturmischklappe (31) angeordnet ist.

3. Klimaanlage nach Anspruch 2, **dadurch gekennzeichnet**, daß im Zuströmkanal (17) für Frischluft eine elektromotorisch gesteuerte Frischluftklappe (26) angeordnet ist.

4. Klimaanlage nach Anspruch 2, **dadurch gekennzeichnet**, daß im Verbindungsbereich zwischen dem Zuströmkanal (17) für Frischluft und dem Zuströmkanal (18) für Umluft die druckgesteuerte Umluftklappe (24) vorgesehen ist.

5. Klimaanlage nach Anspruch 1, **dadurch gekennzeichnet**, daß im Verbindungsbereich des Kaltluftstranges (25) und des Warmluftkanales (8, 8') jeweils eine Temperaturmischklappe (31) angeordnet ist, die von einem Stellmotor (32) angesteuert wird.

6. Klimaanlage nach Anspruch 1, **dadurch gekennzeichnet**, daß im Warmluftkanal (8, 8') nach dem Abgaswärmetauscher (7, 7') eine differenzdruckgesteuerte Klappe (12) angeordnet ist, die in Abhängigkeit von der Stellung der Temperaturmischklappe (31) betätigt wird, dergestalt, daß sich die differenzdruckgesteuerte Klappe (12) selbsttätig öffnet, wenn die Temperaturmischklappe (31) den Warmluftkanal (8, 8') verschließt.

7. Klimaanlage nach Anspruch 1, **dadurch gekennzeichnet**, daß zwei Radialgebläse (34) zum Mischen der Warmluft, Frischluft, Umluft bzw. gekühlten Luft im Gehäuse der Klimaanlage (10) vorgesehen sind.

8. Klimaanlage nach Anspruch 7, **dadurch gekennzeichnet**, daß die Radialgebläse (34) in Bezug auf den Verdampfer (19) und die Warmluft saugseitig angeordnet sind.

## Claims

1. An air-conditioning system for a preferably air-cooled vehicle, having a housing (9), in which an evaporator (19), a chamber (20) and at least one fan (34) are arranged, the housing (9) having outlet ducts (21, 22, 23, 23') with individually closable de-froster, central and foot-space nozzles, through which hot air and/or cold air can optionally be introduced into the passenger compartment (13), and the housing (9) is connected to at least one hot-air duct (8, 8') containing a waste-gas heat exchanger (7, 7') as well as supply ducts for fresh air (17) and circulating air (18), **characterized in that** hot air and/or fresh air and/or circulating air or cooled air is introduced jointly into at least one fan (34) and is swirled and mixed therein, and the mixed air is then conveyed to the passenger compartment (13) by way of individual outlet ducts (21, 22, 23, 23'), a discharge temperature sensor (35) arranged behind the fan (34) sensing the temperature deviation (ΔT) of the mixed air from the nominal temperature set and automatically correcting the setting of a temperature mixing flap (31) provided in front of the fan (34) as a function of the temperature deviation (ΔT).

2. An air-conditioning system according to Claim 1, **characterized in that** the supply duct (17) for fresh air and the supply duct (18) for circulating air are brought together in a common cold-air line (25) in which the evaporator (19) is arranged downstream of a circulating-air flap (24) and upstream of a temperature-mixing flap (31) as viewed with respect to the flow.

3. An air-conditioning system according to Claim 2, **characterized in that** a fresh-air flap (26) controlled by an electric motor is arranged in the supply duct (17) for fresh air.

4. An air-conditioning system according to Claim 2, **characterized in that** the pressure-controlled circulating-air flap (24) is provided in the connexion area between the supply duct (17) for fresh air and the supply duct (18) for circulating air.

5. An air-conditioning system according to Claim 1, **characterized in that** one temperature-mixing flap (31) actuated by a servomotor (32) is arranged in the connexion area of the cold-air line (25) and the hot-air duct (8, 8').

6. An air-conditioning system according to Claim 1, **characterized in that** a flap (12) controlled by differential pressure is arranged in the hot-air duct (8, 8') downstream of the waste-gas heat exchanger (7, 7'), the said flap (12) being actuated as a function of the setting of the temperature-mixing flap (31) in such a way that the flap (12) controlled by differential pressure opens automatically when the temperature-mixing flap (31) closes the hot-air duct (8, 8').

7. An air-conditioning system according to Claim 1, **characterized in that** two radial fans (34) for mixing the hot air, fresh air, circulating air and cooled air respectively are provided in the housing of the air-conditioning system (10).

8. An air-conditioning system according to Claim 7, **characterized in that** the radial fans (34) are arranged at the suction end with respect to the evaporator (19) and the hot air.

## Revendications

1. Installation de climatisation pour un véhicule automobile refroidi de préférence par air, comportant un boîtier (9) dans lequel sont montés un évaporateur (19), une chambre (20) et au moins un ventilateur (34), le boîtier (9) comportant des canaux de sortie (21, 22, 23, 23') avec des buses de dégivrage, de zone moyenne et de zone basse, pouvant être fermées séparément, par lesquelles peut être introduit dans l'habitacle (13), au choix, de l'air chaud et/ou de l'air froid et le boîtier (9) communiquant avec au moins un canal d'air chaud (8, 8') contenant un échangeur de chaleur de gaz d'échappement (7, 7') ainsi qu'avec des canaux d'arrivée d'air frais (19) et d'air recyclé (18), **caractérisé en ce que** l'air chaud et/ou l'air frais et/ou l'air recyclé ou l'air refroidi sont introduits conjointement dans au moins un ventilateur (34) et sont mis en turbulence et brassés dans celui-ci et en ce que l'air mélangé est ensuite envoyé à l'habitacle (13), par des canaux de sortie (21, 22, 23, 23') individuels, une sonde de température de sortie (35), placée en aval du ventilateur (34), interrogeant l'écart de température ($\Delta$T) de l'air mélangé par rapport à la température de consigne sélectionnée et corrigeant automatiquement, en fonction de l'écart de température ($\Delta$T), la position d'un clapet de mélange de température (31), prévu en amont du ventilateur (34).

2. Installation de climatisation selon la revendication 1, **caractérisée en ce que** le canal d'arrivée (17) de l'air frais et le canal d'arrivée (18) de l'air recyclé sont réunis dans une ligne d'air froid (25) commune dans laquelle l'évaporateur (19), vu dans le sens de l'écoulement, est placé en aval d'un clapet d'air recyclé (24) et en amont d'un clapet de mélange de températures (31).

3. Installation de climatisation selon la revendication 2, **caractérisée en ce qu'**il est prévu dans le canal d'arrivée (17) d'air frais, un clapet d'air frais (26) commandé par un moteur électrique.

4. Installation de climatisation selon la revendication 2, **caractérisée en que** que dans la zone de liaison entre le canal d'arrivée (17) d'air frais et le canal d'arrivée (18) d'air recyclé, il est prévu le clapet d'air recyclé (24) commandé par la pression.

5. Installation de climatisation selon la revendication 1, **caractérisée en ce que** dans la zone de liaison de la ligne d'air froid (25) et du canal d'air chaud (8, 8') il est prévu un clapet de mélange de températures (31) qui est commandé par un servomoteur (32).

6. Installation de climatisation selon la revendication 1, **caractérisée en ce que** dans le canal d'air chaud (8, 8') il est prévu, en aval de l'échangeur de chaleur des gaz d'échappement (7, 7'), un clapet (12), commandé par pression différentielle, qui est actionné en fonction de la position du clapet de mélange de températures (31), de manière que le clapet (12) commandé par pression différentielle s'ouvre automatiquement lorsque le clapet de mélange de températures (31) ferme le canal d'air chaud (8, 8').

7. Installation de climatisation selon la revendication 1, **caractérisée en ce qu'**il est prévu deux ventilateurs radiaux (34) pour mélanger l'air chaud, l'air frais, l'air recyclé ou l'air refroidi dans le boîtier de l'installation de climatisation (10).

8. Installation de climatisation selon la revendication 7, **caractérisée en ce que** les ventilateurs radiaux (34) sont placés côté aspiration par rapport à l'évaporateur (19) et par air chaud.

FIG.1

FIG.2

EP 0 351 519 B1

~ 13 ~

FIG.3

FIG.4